# EUROPÄISCHE PATENTSCHRIFT

(11) **EP 1 699 575 B1**
(45) Veröffentlichungstag und Bekanntmachung des Hinweises auf die Patenterteilung: **31.10.2007**
(21) Anmeldenummer: 04803686.7
(22) Anmeldetag: 09.12.2004
(51) Int. Cl.: B21B 31/07, F16J 15/32

(54) **DICHTUNGSVORRICHTUNG FÜR WALZENLAGER**
SEALING DEVICE FOR CYLINDER BEARINGS
DISPOSITIF D'ETANCHEITE POUR PALIERS DE LAMINOIR

(30) Priorität: 03.01.2004 DE 102004001036; 24.01.2004 DE 102004003699
(43) Veröffentlichungstag der Anmeldung: 13.09.2006
(73) Patentinhaber: SMS Demag AG, 40237 Düsseldorf (DE)
(72) Erfinder: ROEINGH, Konrad, 57271 Hilchenbach (DE); KELLER, Karl, 57271 Hilchenbach (DE)
(74) Vertreter: Klüppel, Walter
(86) Internationale Anmeldenummer: PCT/EP2004/014030
(87) Internationale Veröffentlichungsnummer: WO 2005/065855

(56) Entgegenhaltungen:
- EP-A- 0 285 332
- EP-A- 1 038 601
- WO-A-02/076645
- DE-U1- 29 805 241
- PATENT ABSTRACTS OF JAPAN Bd. 1998, Nr. 09, 31. Juli 1998 (1998-07-31) & JP 10 109105 A (KAWASAKI STEEL CORP), 28. April 1998 (1998-04-28)

## Beschreibung

Die Erfindung betrifft eine Dichtungsvorrichtung für Walzenlager, insbesondere Ölfilmlager oder Wälzlager, bei welcher ein, mit einem Walzenzapfen oder einer Zapfenbuchse verbundener, Dichtungsring eine zylinderförmige Dichtfläche aufweist, an die ein drehfest in einer, mit einem Einbaustück verbundenen, Halterung angeordnetes elastisches Dichtungselement anliegt.

Um eine gleichmäßige Reibung zwischen einer Zapfenbuchse und einer Lagerbuchse zu erreichen, wird ein Schmiermittel kontinuierlich in den Spalt zwischen Zapfenbuchse und Lagerbuchse zugeführt. Dieses setzt voraus, dass das überflüssige und / oder verbrauchte Schmiermittel abgeleitet wird. Auf der der Walze entgegengesetzten Seite, d.h. am Ende des Walzenzapfens ist dieses ohne größere Probleme möglich. Auf der der Walze zugewandten Seite ist aber eine Dichtungsvorrichtung vorzusehen, die ein unkontrolliertes Austreten des Schmiermittels auf die Walze und den Walzenzapfen vermeidet.

Eine derartige Dichtungsvorrichtung ist durch die EP 0 297 322 B1 bekannt geworden. Danach wird eine Dichtungsvorrichtung für Walzenlager in Dressiergerüsten, bei denen der Walzenzapfen einen konischen Abschnitt zwischen der Walzenstirnfläche und dem mit einer Zapfenbuchse bestückten, in einer Lagerbuchse im Lagergehäuse gelagerten Bereich des Walzenzapfens aufweist, mit einem einstückigen, ringförmigen, flexiblen, mittels eines Drahtseil - Ringes und ggf. eines Stahlbandes bewehrten Dichtungskörper, der auf den konischen Abschnitt aufgeschoben ist und mit Ringdichtungsansätzen an diesem anliegt, und der mit dem äußeren Ringende mindestens einer von zwei in axialem Abstand angeordneten radialen, elastischen Ringrippen mit elastischem Reibungskontakt an mindestens eine gehäusefeste bzw. gehäusedeckelfeste, seitlich des Ringbundes angeordnete ringförmige Dichtfläche anlegbar ist.

Aus der DE 27 31 313 C2 ist eine Dichtungsvorrichtung für Walzenlager in Walzgerüsten bekannt, bei denen der Walzenzapfen einen konischen Abschnitt zwischen der Walzenstirnfläche und dem mit einer Zapfenbuchse bestückten, in einer Lagerbuchse im Lagergehäuse gelagerten Lagerzapfen aufweist, mit einem einstückigen, ringförmigen flexiblen Dichtungskörper, der auf den konischen Walzenzapfenabschnit aufgeschoben ist und mit Ringdichtungsansätzen an diesem anliegt.

Aus der DE 31 19 951 A1 ist bekannt, dass in einem Walzwerk oder Walzgerüst und zur Verwendung in Kombination mit einem Walzenzapfen, der von einer Lagerbuchse umgeben ist, die in einer stationären und in einem Lagereinbaustück angeordneten Lagerbuchse drehbar gelagert ist, eine den konischen Abschnitt des Walzenzapfens umschließende Dichtungskonstruktion und eine kreisförmige Dichtungsplatte, die den konischen Teil des Walzenzapfens umschließt und relativ zum Lagereinbaustück befestigt, wobei zwischen der Lagerbuchse und der stationär angeordneten Buchse Schmieröl zugeführt wird. Zum kreisförmigen und flexiblen / elastischen Dichtungselement, welches auf den konischen Teil des Walzenzapfens derart aufgesetzt ist, dass es sich mit dem konischen Teil des Walzenzapfens drehend bewegen kann, gehört ein von diesem Dichtungselement nach außen geführter Flansch, der mit der benachbarten Fläche der Dichtungsendplatte in Dichtungskontakt steht. Relativ zur Dichtungsendplatte ist ein äußerer Dichtugnsring angeordnet und befestigt. Dieser äußere Dichtungsring hat eine zylindrische Innenfläche, die mit der Innenfläche der Dichtungsendplatte einen zur Stirnseite des Walzenballens hin geöffneten kreisförmigen Hohlraum bildet. Ein Dichtungsinnenring liegt mit seinem inneren Teil an dem flexiblen / elastischen Dichtungselement an, während der äußere Umfangsteil bis in den vorerwähnten Hohlraum hineingeführt ist, während weiterhin die Lippen oder Ansätze in Dichtungskontakt mit der inneren Zylinderfläche des äußeren Dichtungsringes und mit der Stirnfläche der Walzen stehen.

Bekannt ist, dass die Oberfläche des Dichtungsringes durch Stichschleifen bzw. schleifen In Einstich erzeugt wird, wobei vorher eine Grundstruktur durch Drehen aufgebracht wird. Weiterhin ist bekannt, das die Oberfläche des Dichtungsringes eine einem Gewinde ähnliche Struktur aufweist. Diese kann, je nach Er fordemissen und Gestaltung des Dichtungsringes, geteilt sein und als rechts - und linksdrehender Drall ausgebildet sein.

Nach der gattungsgemäßen WO 021076645 A stehen die an der Oberfläche des Dichtungsringes anliegenden elastischen Dichtungselemente bzw. deren Dichtungslippen in direktem Kontakt mit dieser Oberfläche und werden, wenn sich die Walzen drehen, durch deren Struktur angegriffen und nach einer gewissen Zeit zerstört.

Der Erfindung liegt die Aufgabe zugrunde, eine Vorrichtung der eingangs beschriebenen Art so auszubilden, dass die Lebensdauer der elastischen Dichtungselemente erhöht und die Reibung reduziert wird.

Diese Aufgabe wird erfindungsgemäß dadurch gelöst, dass die Dichtfläche des Dichtungsringes rolliert ist. Vorteilhafte Ausgestaltungen der Erfindung sind in den Unteransprüchen angegeben.

Der entscheidende Vorteil der erfindungsgemäßen Vorrichtung liegt darin, dass durch das Rollieren die Dichtfläche einer Kaltverfestigung unterzogen wird und die Rauhigkeit minimiert wird. Dabei werden die vorhandenen, im Mikrometerbereich liegenden Erhöhungen, gegenüber der vorhandenen geschliffenen Dichtfläche, reduziert und verfestigt.

Auf die nun vorhandene Dichtfläche kann in einen weiteren Bearbeitungsschritt, einem Plasma - Diffusionsverfahren in einem heißen Plasmastrahl (480° - 520° C), eine Plasmanitrierung aufgetragen werden. Hierdurch wird die Dichtfläche noch härter und verschleißfester.

Durch ein zusätzliches Oxidieren der Dichtfläche oder dem Teil der Dichtfläche welcher mit dem elastischen Dichtungselement in Kontakt ist, wird eine glatte Oberfläche erzielt und gleichzeitig die Reibung reduziert. Weiterhin weist die durch Oxidieren bearbeitete Oberfläche einen Korrisionsschutz auf.

Zusätzlich wird der Nachteil bei bisher beschichteten Oberflächen vermieden, dass diese Schicht wärmeisolierend wirkt und dadurch die Temperatur der Lippe / der Lippen höher ist.

Ein Ausführungsbeispiel der Erfindung wird anhand einer sehr schematischen Zeichnung näher beschrieben. Es zeigt:
- Fig. 1: einen Ausschnitt einer Walze mit Ölfilmlager und
- Fig. 2: eine Detailansicht des Dichtungsbereiches.

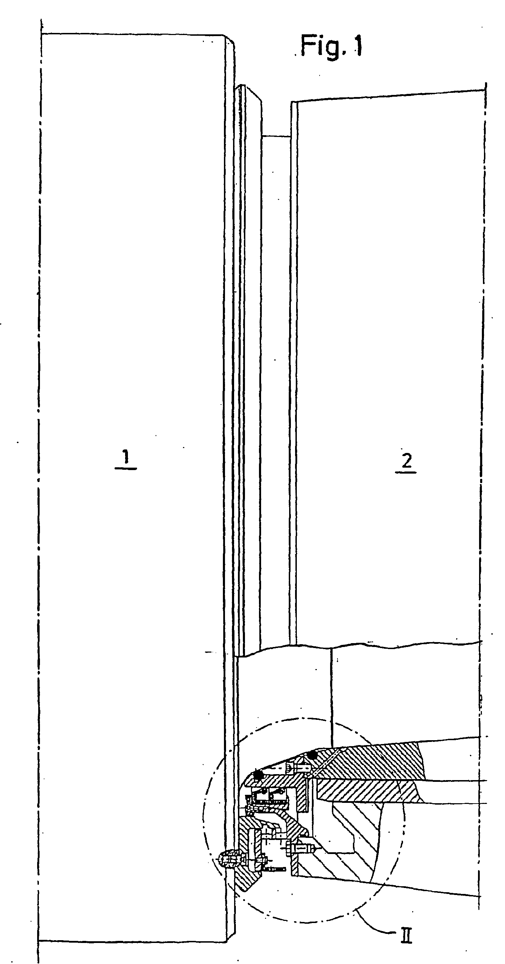

In Fig. 1 ist eine Walze 1 dargestellt, welche einen Walzenzapfen 2 aufweist. Auf dem Walzenzapfen 2 befindet sich eine Zapfenbuchse 3. Diese wiederum ist in einer Lagerbuchse 4 angeordnet. Zwischen der Zapfenbuchse 3 und der Lagerbuchse 4 wird zur Minimierung der Reibung ein Schmiermittel, beispielsweise Öl, eingebracht. Die Lagerbuchse 4 ist in einem Einbaustück 5 angeordnet, welches in den Ständerfenstern eines Walzgerüstes (nicht dargestellt) positioniert ist.

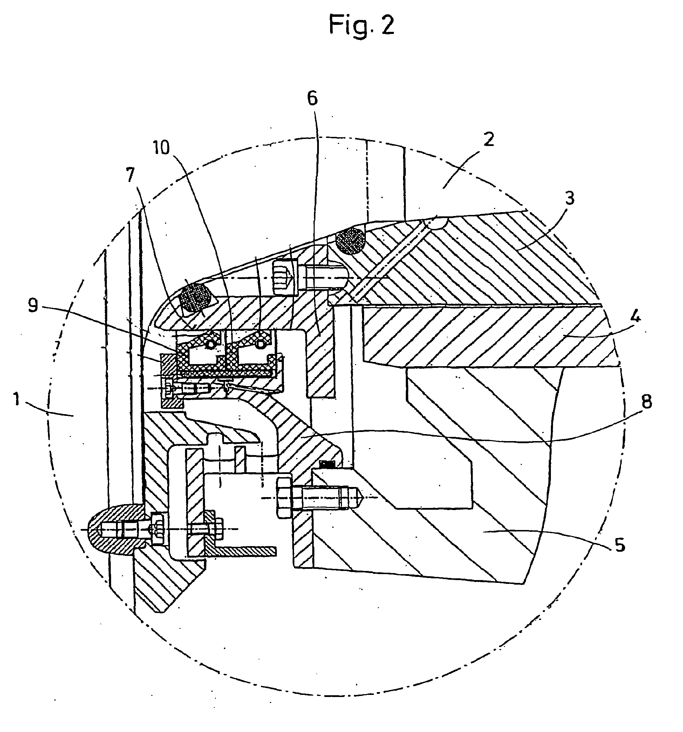

Damit das Schmiermittel nicht auf die Walze 1 und den Walzenzapfen 2 gelangt, ist, wie in Fig. 2 dargestellt, an der Zapfenbuchse 3 ein Dichtungsring 6 befestigt. Dieser besitzt eine zylinderförmige Dichtfläche 7 auf. Der Dichtfläche 7 gegenüber befindet sich eine Halterung 8, welche ein elastisches Dichtungselement 9, 10 aufnimmt und das Dichtungselement 9, 10 ortsfest und verdrehsicher festhält.

Die Dichtfläche 7 im Dichtungsring 6 ist zylinderförmig ausgebildet, um auch bei einer axialen Verschiebung der Walze 1 mit dem Walzenzapfen 2 im Walzenlager einen konstanten Kontakt zum elastischen Dichtungselement 9, 10 bzw. der Dichtungslippe 11,12 zu haben.

## Patentansprüche

1. Dichtungsvorrichtung für Walzenlager, insbesondere Ölfilmlager oder Wälzlager, bei welcher ein mit dem Walzenzapfen (2) oder der Zapfenbuchse (3) verbundener Dichtungsring (6) eine zylinderförmige Dichtfläche (7) aufweist, an die ein drehfest in einer, mit einem Einbaustück (5) verbundenen, Halterung (8) angeordnetes elastisches Dichtungselement (9,10) anliegt,
**dadurch gekennzeichnet,**
**dass** die Dichtfläche (7) rolliert ist.

2. Dichtungsvorrichtung nach Anspruch 1,
**dadurch gekennzeichnet,**
**dass** die Dichtfläche (7) plasmanitriert ist.

3. Dichtungsvorrichtung nach Anspruch 1 oder 2,
**dadurch gekennzeichnet,**
**dass** die Dichtfläche (7) oxidiert ist.

4. Dichtungsvorrichtung nach einem der Ansprüche 1 bis 3,
**dadurch gekennzeichnet,**
**dass** das elastische Dichtungselement (9, 10) ein Radialwellendichtring ist.

5. Dichtungsvorrichtung nach Anspruch 4,
**dadurch gekennzeichnet,**
**dass** der Radialwellendichtring Stützelemente aufweist.

## Claims

1. Sealing device for roll bearings, particularly oil film bearings or roller bearings, in which a sealing ring (6) connected with the roll pin (2) or the pin bush (3) has a cylindrical sealing surface (7) against which a resilient sealing element (9, 10) arranged to be rotationally fast in a retainer connected with a chock (5) bears, **characterised in that** the sealing surface (7) is roller-burnished.

2. Sealing device according to claim 1, **characterised in that** the sealing surface (7) is plasma-nitrided.

3. Sealing device according to claim 1 or 2, **characterised in that** the sealing surface (7) is oxidised.

4. Sealing device according to one of claims 1 to 3, **characterised in that** the resilient sealing element (9, 10) is a rotary shaft sealing ring.

5. Sealing device according to claim 4, **characterised in that** the rotary shaft sealing ring has support elements.

## Revendications

1. Dispositif d'étanchéité pour paliers de cylindres, en particulier pour paliers à film lubrifiant ou pour paliers à roulement, dans lequel une bague d'étanchéité (6) reliée au tourillon de cylindre (2) ou à la douille de tourillon (3) présente une surface d'étanchéité cylindrique (7) contre laquelle s'applique un élément d'étanchéité élastique (9, 10) agencé solidairement en rotation dans une monture (8) reliée à un insert (5),
**caractérisé en ce que**
la surface d'étanchéité (7) est galetée.

2. Dispositif d'étanchéité selon la revendication 1,
**caractérisé en ce que**
la surface d'étanchéité (7) est nitrurée au plasma.

3. Dispositif d'étanchéité selon la revendication 1 ou 2,
**caractérisé en ce que**
la surface d'étanchéité (7) est oxydée.

4. Dispositif d'étanchéité selon l'une des revendications 1 à 3,
**caractérisé en ce que**
l'élément d'étanchéité élastique (9, 10) est une bague d'étanchéité d'arbre radial.

5. Dispositif d'étanchéité selon la revendication 4,
**caractérisé en ce que**
la bague d'étanchéité d'arbre radial comprend des éléments de soutien.
